Europäisches Patentamt

European Patent Office

Office européen des brevets

(19)

(11) Veröffentlichungsnummer: **0 154 202**
**B1**

(12) **EUROPÄISCHE PATENTSCHRIFT**

(45) Veröffentlichungstag der Patentschrift:
**07.01.87**

(51) Int. Cl.⁴: **G 11 B 5/72**

(21) Anmeldenummer: **85101405.0**

(22) Anmeldetag: **09.02.85**

(54) Verfahren zur Herstellung von magnetischen Aufzeichnungsträgern mit Rückschicht sowie danach hergestellte magnetische Aufzeichnungsträger.

(30) Priorität: **18.02.84  DE 3405960**

(43) Veröffentlichungstag der Anmeldung:
**11.09.85 Patentblatt 85/37**

(45) Bekanntmachung des Hinweises auf die Patenterteilung:
**07.01.87 Patentblatt 87/2**

(84) Benannte Vertragsstaaten:
**DE FR GB NL**

(56) Entgegenhaltungen:
**DE - A - 3 208 454**
**DE - A - 3 224 318**
**DE - A - 3 323 441**
**DE - B - 2 250 383**
**DE - B - 2 352 958**

(73) Patentinhaber: **BASF Aktiengesellschaft,
Carl-Bosch-Strasse 38, D-6700 Ludwigshafen (DE)**

(72) Erfinder: **Melzer, Milena, Kirchenstrasse 116,
D-6700 Ludwigshafen (DE)**
Erfinder: **Roller, Hermann, Schwedlerstrasse 118,
D-6700 Ludwigshafen (DE)**
Erfinder: **Schneider, Norbert, Madenburgstrasse 5 F,
D-6701 Altrip (DE)**
Erfinder: **Fitterer, Horst, Neckarpromenade 34,
D-6800 Mannheim (DE)**
Erfinder: **Muenzner, Wulf, Dr., Lorscher Ring 10,
D-6710 Frankenthal (DE)**

## Beschreibung

Die Erfindung betrifft ein Verfahren zur Herstellung von magnetischen Aufzeichnungsträgern durch Aufbringen einer Magnetschicht, im wesentlichen bestehend aus in organischen Polymeren feinverteiltem magnetischen Material, auf eine Seite eines flexiblen Trägermaterials und Auftragen einer nichtmagnetisierbaren, an anorganischen Feststoffen freien Rückschicht auf die der Magnetschicht gegenüberliegende Seite des Trägermaterials, wobei die Rückschicht aus mindestens zwei aus einem Lösungsmittelgemisch ausgeschiedenen miteinander nicht verträglichen Polymeren besteht, sowie die danach hergestellten magnetischen Aufzeichnungsträger.

Es ist bekannt, flexible magnetische Aufzeichnungsträger mit nichtmagnetisierbaren nichtleitfähigen und/oder leitfähigen Stoffen enthaltenden Rückbeschichtungen zu versehen.

In der US-PS 3 293 066 wird beschrieben, dass elektrostatische Aufladungen von Magnetbändern, die sich bei zur digitalen Aufzeichnung verwendeten Geräten bei Bandgeschwindigkeiten über 5 m/sec bilden können, durch Aufbringen leitfähiger Rückbeschichtungen beseitigt und dadurch Bandrückseiten verschleissfester gemacht werden können. Es ist ausserdem aus der GB-PS 1 197 661 und der US-PS 4 135 031 bekannt, durch Aufbringen von Rückschichten mit einer vorgegebenen Oberflächenrauhigkeit die Wickeleigenschaften der Bänder zu verbessern. Auch für Magnetkarten sind solche Rückbeschichtungen bekannt. Aus der DE-PS 2 500 546 ist schliesslich bekannt, dass Rückschichten auch für die Benutzung von Videobändern von Vorteil sind. Dabei wirkt sich die Rückbeschichtung vor allem im Hinblick auf die geringere Fehlerhäufigkeit im Spielbetrieb aus, da bei magnetischen Aufzeichnungsträgern ohne Rückschicht der Folienabrieb von der Rückseite des Aufzeichnungsträgers eine insbesondere bei Videobändern nicht tolerierbar hohe Fehlerzahl bewirkt.

Nach den bisher bekannten Verfahren wurde für diese Zwecke eine pigmentierte Rückbeschichtung verwendet. Als Pigmente wurden in den meisten Fällen abrasive Substanzen anorganischer Herkunft, wie Silikate, Titandioxid und auch synthetische Kieselsäure eingesetzt. Bekannt ist auch die Verwendung von Graphit, Russ, Molybdändisulfid oder Bariumsulfat. Als Bindemittel werden dabei die an sich bekannten Bindemittel wie Polyacrylate, Polyamide, Cellulosenitrate, Polyester, Polyurethane, Phenoxyharze, Mischpolymerisate aus Vinylchlorid/Acrylnitril und Copolymerisate aus Vinylchlorid, Vinylacetat und Vinylalkohol herangezogen. Die mechanische Beanspruchung der Rückschichten erfordert jedoch meist eine elastische Einstellung. Deshalb werden häufig Polyurethanelastomere mit relativ spröden Polymeren, wie Phenoxyharze, Vinylchlorid, Vinylacetat-Copolymeren, Polycarbonat u.a. kombiniert.

Diese pigmentierten Rückbeschichtungen nach bekannten Verfahren haben jedoch Nachteile. So erfordert das Einarbeiten des Pigments mittels Mahlen und Dispergieren, in das Bindemittelsystem einen speziellen Verfahrensschritt. Vor allem aber prägen sich die harten Spitzen der pigmentierten Rückbeschichtung während der Lagerung im Wickel in die Magnetschicht der nächsten Lage ein. Diese Prägungen führen dann zur Verschlechterung derjenigen funktionellen Eigenschaften der Magnetschicht, die von ihrer Oberflächenglätte beeinflusst werden, wie den Signal/Rauschabstand bei Video- bzw. Computerband, Höhenempfindlichkeit und Höhenaussteuerbarkeit beim Audioband, bzw. ganz allgemein die Aufzeichnungs- und Wiedergabeeigenschaften bei hohen Frequenzen. Durch die von den harten Spitzen der Rückbeschichtung stammenden Verprägungen können auch Drop-outs verursacht werden.

Aufgabe vorliegender Erfindung war es daher, einen magnetischen Aufzeichnungsträger mit einer auf der der Magnetschicht gegenüberliegenden Seite des Trägermaterials aufgebrachten Rückschicht bereitzustellen, der die vorgenannten Nachteile nicht aufweist und die Rückschicht insbesondere die für ein ausgezeichnetes Wickelverhalten erforderliche Rauhigkeit besitzt, ohne dadurch eine Verprägung der Magnetschicht durch die Rückschicht mit der gleichzeitig auftretenden Verschlechterung des Signal-Rausch-Abstandes zu bewirken.

Es wurde nun gefunden, dass magnetische Aufzeichnungsträger, bestehend aus einem flexiblen Trägermaterial, einer auf der einen Seite des Trägermaterials haftfest aufgebrachten Magnetschicht aus in einem organischen Polymeren feinverteiltem magnetischen Material und einer auf die gegenüberliegenden Seite des Trägermaterials haftfest aufgebrachten nichtmagnetisierbaren, an anorganischen Feststoffen freien Rückschicht, die aufgabengemäss geforderten Eigenschaften aufweisen, wenn zur Bildung der Rückschicht mindestens zwei miteinander nicht verträgliche Polymere in einem Gemisch aus einem niedrigsiedenden und einem höhersiedenden Lösungsmittel gelöst werden, die Lösung auf das Trägermaterial schichtförmig aufgetragen wird und die Lösungsmittel verdunstet werden, mit der Massgabe, dass die Polymere in dem höhersiedenden Lösungsmittel nicht löslich sind.

Die erfindungsgemässen magnetischen Aufzeichnungsträger weisen somit eine an anorganischen Feststoffen freie Rückschicht auf, die aus mindestens zwei miteinander nicht verträglichen Polymeren besteht. Sie werden hergestellt durch Aufbringen einer Lösung der Abmischung mindestens zweier miteinander unverträglicher Bindemittelkomponenten in einem Lösungsmittelgemisch. Dieses Gemisch besteht aus mindestens zwei bei unterschiedlichen Temperaturen siedenden Lösungsmitteln, wobei die Bindemittelkomponenten in der höhersiedenden Komponente des Lösungsmittelgemisches unlöslich sind. Nach Auftrag dieser Rückbeschichtung verdampft während der Trocknung zuerst die niedersiedende Lösungsmittelkomponente, in der die Bindemittelkomponenten gelöst sind, so dass dann in der zweiten Phase die Bindemittelkomponenten aus der Lösung ausfallen und sich dabei entmischen. So entsteht eine rauhe Beschichtung, die in ihrem Oberflächencharakter einer pigmentierten rauhen Rückbeschichtung ähnlich ist.

Für den erfindungsgemässen Zweck eignen sich eine Reihe bekannter Polymere, welche miteinander unverträglich sind. In besonders vorteilhafter Weise lassen sich für die Ausbildung der Rückschicht folgende Kombinationen der miteinander unverträglicher Polymerer heranziehen: Epoxidharze-Polyvinylchlorid, Epoxidharze-Polyvinylidenchlorid, Epoxidharze-Vinylchlorid-/Vinylacetat-Copolymere, Epoxidharze-Polyätherurethan, Polyätherurethan-Polyvinylformal, Chlorkautschuk-Polyvinylformal u.a.

Diese die Rückschicht bildenden Polymerkombinationen werden gemäss der Erfindung in einem Lösungsmittelgemisch aus einem hochsiedenden und einem niedrigsiedenden Anteil gelöst. Geeignete Lösungsmittelmischungen sind bevorzugt solche auf der Basis von Tetrahydrofuran und/oder Toluol und/oder Xylol und/oder Dioxan und/oder Wasser, sowie Mischungen von Toluol und Aceton oder Toluol und Ethylacetat. Bei diesen Mischungen beträgt der Anteil der niedrigsiedenden Komponente vorteilhafterweise 40 bis 90 Gew.-%.

Zur Herstellung der Rückschichten bedarf es lediglich, die geeigneten Bindemittel in dem Lösungsmittelgemisch zu lösen und in üblicher Technik auf die Rückseite des die Magnetschicht tragenden Trägermaterials des magnetischen Aufzeichnungsträgers aufzubringen. Die mechanischen Eigenschaften der Rückschichten lassen sich gegebenenfalls, falls dies für besondere Beanspruchungen erforderlich ist, dadurch verbessern, dass Bindemittel mit reaktiven Gruppen eingesetzt werden, welche sich dann mit Hilfe von Polyisocyanaten vernetzen lassen. Auch können der Rückschicht weitere nicht teilchenförmige Hilfsstoffe, wie Gleitmittel oder Antistatika zugesetzt werden.

Die Oberflächenrauhigkeit der erfindungsgemässen Rückschichten wird zweckmässigerweise durch Variierung des Mengenverhältnisses der Polymerkombination, des Mengenverhältnisses der Lösungsmittelkomponenten sowie der Polymerkonzentration im Lösungsmittelgemisch eingestellt. Die Schichtdicken betragen üblicherweise 0,3 bis 1,5μm.

Die erfindungsgemäss hergestellten magnetischen Aufzeichnungsträger mit Rückschicht zeichnen sich gegenüber solchen nach dem Stand der Technik mit einer durch Pigmentierung erzeugten Rauhigkeit der Rückschicht vor allem darin aus, dass einerseits die an sich rauhe Rückschicht jedoch nicht so hart ist, dass bei der Lagerung der entsprechenden magnetischen Aufzeichnungsträger im Wickel Verprägungen der Magnetschicht entstehen aber andererseits die Oberflächenrauhigkeit der Rückschicht dennoch die geforderte gute Wickeleigenschaft der magnetischen Aufzeichnungsträger gewährleistet. Solche Verprägungen würden insbesondere die Eigenschaften der Magnetschicht für die Aufzeichnung und Wiedergabe von hohen Frequenzen verschlechtern und des weiteren die Fehlerzahl erhöhen. Diese besonders bei Videobändern gravierenden Nachteile werden mit den erfindungsgemässen magnetischen Aufzeichnungsträgern weitgehend vermieden.

Ein weiterer Vorteil ist, dass das Verfahren zur Herstellung dieser Rückschichten gegenüber den ansonsten üblichen Verfahren vereinfacht ist und dass sich wegen der besonderen Ausgestaltung der Rückschicht ohne Anteil von harten die nötige Rauhigkeit erzeugenden Feststoffen, eine Oberflächenvergütung der Magnetschicht in einem Arbeitsgang zum Abschluss des Herstellungsverfahrens des magnetischen Aufzeichnungsträgers vornehmen lässt, ohne dass die Rauhigkeit hinderlich und nachteilig ist.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht.

*Beispiel 1:*

In einer Mischung aus 392 Teilen Tetrahydrofuran und 588 Teilen Toluol wurden je 10 Teile eines Epoxidharzes aus Bisphenol A und Epichlorhydrin mit einem OH-Gehalt von 6,1% und einem Molgewicht von 30 000 sowie eines Copolymeren aus Vinylchlorid, Dimethylmaleinat und Diethylmaleinat im Verhältnis von 80/10/10 und einem K-Wert von 60 gelöst und in einer üblichen Beschichtungsmaschine mittels einer Rasterwalze auf die Rückseite einer mit einer für die Videoaufzeichnung geeigneten Magnetschicht versehenen Polyethylenterephthalatbahn aufgetragen. Nach dem Trocknen der Rückschicht mit einem 70°C heissen Luftstrom im Gegenstrom wurde die Rauhigkeit durch Bestimmung der gemittelten Rauhtiefe $R_z$ und des Mittelrauhwerts $R_a$ gemäss DIN 4768, Blatt 1 sowie das Flächengewicht $F_g$ ermittelt. Die Ergebnisse sind in der Tabelle 1 angegeben.

*Beispiel 2:*

Es wurde wie in Beispiel 1 beschrieben verfahren, jedoch wurden jeweils 15 Teile der angegebenen Polymere in einer Mischung aus 388 Teilen Tetrahydrofuran und 582 Teilen Toluol gelöst. Die Ergebnisse sind in der Tabelle 1 angegeben.

*Beispiel 3:*

Es wurde wie in Beispiel 1 beschrieben verfahren, jedoch wurden jeweils 20 Teile der angegebenen Polymere in einer Mischung aus 384 Teilen Tetrahydrofuran und 576 Teilen Toluol gelöst. Die Ergebnisse sind in der Tabelle 1 angegeben.

*Beispiel 4:*

Es wurde wie in Beispiel 1 beschrieben verfahren, jedoch wurden jeweils 30 Teile der angegebenen Polymere in einer Mischung aus 376 Teilen Tetrahydrofuran und 564 Teilen Toluol gelöst. Die Ergebnisse sind in der Tabelle 1 angegeben.

*Tabelle 1*

|  | $R_z$ [µm] | $R_a$ [µm] | $R_z:R_a$ | $F_g$ [g/cm²] |
|---|---|---|---|---|
| Beispiel 1 | 0,80 | 0,065 | 13,5:1 | 0,12 |
| Beispiel 2 | 0,80 | 0,080 | 10 :1 | 0,15 |
| Beispiel 3 | 0,78 | 0,094 | 8 :1 | 0,19 |
| Beispiel 4 | 1,44 | 0,27 | 5,3:1 | 0,42 |
| Folienseite des Magnetbandes | 0,56 | 0,052 | 10,7:1 | — |

*Beispiel 5:*

Es wurde wie in Beispiel 1 beschrieben verfahren, jedoch wurden jeweils 24 Teile der beiden Polymere in einer Mischung aus den in Tabelle 2 angegebenen Mengen Tetrahydrofuran und Toluol gelöst. Nach dem Auftrag dieser Lösungen mittels einer Rasterwalze auf die Rückseite einer mit einer Magnetschicht versehenen Polyethylenterephthalatbahn und dem Trocknen ergaben sich die in Tabelle 2 angegebenen Schichtdicken d. Nach dem Schneiden der Folienbahn in 1/2 Zoll breite Magnetbänder wurde durch schnelles Umspulen der Bänder die Wickeleigenschaft dadurch geprüft, dass optisch die Stirnseite der Wickel nach herausstehenden Wickellagen abgesucht wurde. Die Magnetbänder zeigten allesamt einen glatten Wickel im Gegensatz zu einem Magnetband, das aus der nur mit der Magnetschicht versehenen Folienbahn geschnitten wurde. An den Bandmustern wurden die Rauhigkeiten $R_z$ und $R_a$ längs und quer zur Auftragsrichtung bestimmt.

Die Ergebnisse sind in der Tabelle 2 im Vergleich zu denjenigen des magnetischen Aufzeichnungsträgers ohne Rückschicht angegeben.

*Tabelle 2*

|  | Teile THF/Toluol | d Schichtdicke [µm] | $R_z$ längs/quer [µm] | $R_a$ längs/quer [µm] |
|---|---|---|---|---|
| Beispiel 5a | 301/454 | 0,7 | 1,29/1,30 | 0,17/0,14 |
| Beispiel 5b | 376/376 | 0,8 | 1,23/1,13 | 0,20/0,17 |
| Beispiel 5c | 451/301 | 0,8 | 1,36/1,26 | 0,24/0,27 |
| Beispiel 5d | 526/226 | 0,7 | 1,16/1,30 | 0,21/0,22 |
| Beispiel 5e | 677/75 | 0,5 | 0,50/0,78 | 0,053/0,078 |
| Folienseite des Magnetbandes | — | — | 0,56/0,56 | 0,052/0,052 |

Aus der beschichteten und mit der Rückschicht versehenen Folienbahn gemäss Beispiel 5b wurden 3,81 mm breite Bänder geschnitten und in Cassetten konfektioniert. Die Untersuchung der Gleichlaufeigenschaften durch Messung der Tonhöhenschwankungen (Wow und Flutter) nach DIN 45 507 ergab für die Bänder gemäss Beispiel 5b 0,34% und für die Bänder ohne Rückschicht 0,77%.

*Beispiel 6:*

In einem Lösungsmittelgemisch aus 188 Teilen Tetrahydrofuran und 282 Teilen Toluol wurden je 15 Teile des in Beispiel 1 angegebenen Epoxidharzes sowie eines Copolymeren aus Vinylchlorid, −acetat und −alkohol im Verhältnis 91:3:6 und mit einem K-Wert von 48 gelöst. Diese Lösungen wurden nun unter kräftigem Rühren mit 14,2 g einer 75%igen Lösung eines Triisocyanats aus 3 Mol Toluylendiisocyanat und 1 Mol Trimethylolpropen in Äthylacetat versehen, so dass 60% der reaktiven Gruppen der Polymere vernetzt wurde. Unmittelbar danach wurde diese Lösung in einer Beschichtungsmaschine mittels Rasterwalzen auf die Rückseite einer mit einer üblichen Magnetschicht beschichteten Folienbahn aufgetragen und in einem auf 70° C beheizten Kanal getrocknet. Die gemessenen Rauhigkeitswerte betrogen für
$R_z$ = 0,83 µm
$R_a$ = 0,10 µm.

Der auf diese Weise mit der Rückschicht versehene magnetische Aufzeichnungsträger wurde nun in 1/2 Zoll breite Bänder geschnitten in VHS-Videocassetten konfektioniert.

Diese wurden nun auf einem handelsüblichen VHS-Videorecorder Pal 19 der Firma Victor Comp. of Japan gegen das Standardband 868 KM/14 B gemessen. Die Messergebnisse sind in Tabelle 3 angegeben.

*Vergleichsversuch 1*

Das für das Auftragen der Rückschicht in Beispiel 6 eingesetzte magnetische Aufzeichnungsmaterial wurde ohne Rückschicht in 1/2 Zoll breite Bänder geschnitten und gemäss Beispiel 6 vermessen. Die Ergebnisse sind in Tabelle 3 angegeben. Die Rauhigkeit der Folienrückseite betrugen:
$R_z$ = 0,56 µm
$R_a$ = 0,052 µm.

*Tabelle 3*

|  |  | Vergl. Vers. 1 | Beispiel 6 |
|---|---|---|---|
| Hochfrequenzpegel bei 5 MHz | [dB] | +1,5 | +1,5 |
| Chroma-Pegel bei 650 kHz | [dB] | +3,0 | +3,0 |
| S/N Luminanz bei 5 MHz | [dB] | +0,5 | +0,5 |
| S/N Chroma bei 650 kHz | [dB] | +1,0 | +1,0 |
| Tonpegel 1 kHz | [dB] | +2,0 | +2,0 |
| Tonpegel 5 kHz | [dB] | +0,5 | +0,5 |
| Fehlerzahl/min* |  | 30 | 31 |

\* als Fehler wird die Anzahl der Pegeleinbrüche von mehr als 15 dB und einer Dauer von mehr als 15 µsec gezählt.

*Beispiel 7:*

Je 100 Teile der beiden in Beispiel 1 eingesetzten Polymere wurden in einem Lösungsmittel aus 2000 Teilen Tetrahydrofuran und 3000 Teilen Toluol gelöst und wie in Beispiel 6 beschrieben auf die Rückseite einer mit einer für die Videoaufzeichnung geeigneten Magnetschicht versehenen Polyethylenterephthalatfolienbahn aufgetragen. Die Messung der daraus hergestellten VHS-Videobänder erfolge wie in Beispiel 6 angegeben. Die Ergebnisse sind in Tabelle 4 angegeben.

*Vergleichsversuch 2*

In einer Mühle mit einem Inhalt von 250 Teilen enthaltend 400 Teile Stahlkugeln vom Durchmesser 4 bis 6 mm wurden 4,5 Teile leitfähiger mit einer spezifischen Oberfläche von 150 bis 220 m²/g und einem pH-Wert von 7 bis 8, 72 Teile einer 10%igen Lösung eines handelsüblichen elastomeren und isocyanatgruppenfreien Polyesterurethans aus Adipinsäure, Butandiol-1,4 und 4,4'-Diisocyanato-diphenylmethan in Tetrahydrofuran-Dioxan 1:1, 18 Teile einer 10%igen Lösung eines Epoxyharzes aus Bisphenol A und Epichlorhydrin in Tetrahydrofuran-Dioxan 1:1 sowie 0,045 Teile Isostearinsäure 120 Stunden gemahlen, dann wurden 0,9 Teile Siliconöl zugesetzt und nach 24-stündiger Mahldauer 0,9 Teile pyrogene Kieselsäure mit einer spezifischen Oberfläche von 100 bis 200 m²/g zugegeben. Nach Zugabe von weiteren 38,5 Teilen eines Lösungsmittelgemischs aus 29 Teilen Tetrahydrofuran, 28 Teilen Dioxan und 42 Teilen Cyclohexanon wurde nochmals 10 Stunden gemahlen. Die Dispersion wurde dann filtriert und nach Zugabe von 0,125 Teilen einer 50%igen Lösung eines Triisocyanats, hergestellt aus 3 Molen Toluylendiisocyanat und 1 Mol 1,1,1-Trimethylpropan, in Äthylacetat pro Teil Dispersion 30 Minuten unter Rühren umgepumpt und sodann mit einer Rasterwalze auf die Rückseite einer wie in Beispiel 7 angegebenen und mit einer Magnetschicht versehenen Polyäthylenrephthalatfolienbahn auf die bereits eine Polyvinylidenchlorid Haftvermittlerschicht aufgebracht war, aufgetragen und nachfolgend in einem auf 70° C beheizten Trocknungskanal getrocknet.

Die Weiterverarbeitung und Prüfung der resultierenden magnetischen Aufzeichnungsträger erfolgte wie in Beispiel 6 beschrieben. Die Ergebnisse sind in der Tabelle 4 angegeben.

*Vergleichsversuch 3*

Es wurde die in Beispiel 7 eingesetzte mit der für die Videoaufzeichnung geeigneten Magnetschicht versehene Polyethylenterephthalatfolienbahn unmittelbar wie in Beispiel 6 angegeben zu Videobändern verarbeitet und entsprechend geprüft. Die Messergebnisse sind in Tabelle 4 angegeben.

*Tabelle 4*

|  |  | Vergl. Vers. 3 | Beispiel 7 | Vergl. Vers. 2 |
|---|---|---|---|---|
| $R_z$ (µm) |  | 0,38 | 0,96 | 0,95 |
| $R_a$ (µm) |  | 0,032 | 0,14 | 0,15 |
| Hochfrequenzpegel bei 5 MHz | [dB] | +1,6 | +1,4 | +1,0 |
| Chroma-Pegel bei 650 kHz | [dB] | +3,0 | +3,0 | +3,0 |
| S/N Luminanz bei 5 MHz | [dB] | +0,4 | ±0 | −0,6 |
| S/N Chroma bei 650 kHz | [dB] | +0,8 | +0,5 | ±0 |
| Tonpegel 1 kHz | [dB] | +1,8 | +1,6 | +1,6 |
| Tonpegel 5 kHz | [dB] | +0,4 | +0,6 | −0,2 |
| Fehlerzahl/min |  | 32 | 40 | 80 |

Die Bänder mit Rückbeschichtung (Beispiel 7 und Vergleichsversuch 2) zeigten ein gleich gutes Wickelverhalten und gleichmässige Wickel im Gegensatz zu dem Magnetband ohne Rückschicht (Vergleichsversuch 3).

*Beispiel 8:*

In einem Lösungsmittelgemisch aus 4500 Teilen Tetrahydrofuran und 500 Teilen Wasser wurden je 100 Teile der in Beispiel 1 genannten Polymere sowie 5 Teile n-Butylstearat gelöst. Diese Lösung wurde mit einer Rasterwalze auf die Rückseite einer Polyethylenterephthalatfolienbahn aufgetragen. Nach dem Trocknen der Rückschicht in einem auf 70° C aufgeheizten Trocknungskanal wurde in bekannter Weise eine für die Videoaufzeichnung geeignete Magnetdispersion aufgebracht, die magnetischen Teilchen in Aufzeichnungsrichtung orientiert, getrocknet und die mit Magnetschicht und Rückschicht versehene Folienbahn kalandriert. Der resultierende magnetische Aufzeichnungsträger wurde wie in Beispiel 6 beschrieben aufgearbeitet und geprüft. Die Ergebnisse sind in Tabelle 5 angegeben.

*Vergleichsversuch 4*

Die in Beispiel 8 eingesetzte mit einer Magnetschicht versehene Polyethylenterephthalatfolienbahn wurde mit einer Rückschicht wie im Vergleichsversuch 2 beschrieben versehen und in gleicher Weise wie in Beispiel 8 angegeben aufgearbeitet und geprüft. Die Ergebnisse sind in der Tabelle 5 angegeben.

*Vergleichsversuch 5*

Es wurde die in Beispiel 8 eingesetzte, mit der für die Videoaufzeichnung geeigneten Magnetschicht versehene Polyethylenterephthalatfolienbahn unmittelbar wie in Beispiel 6 angegeben zu Videobändern verarbeitet und entsprechend geprüft. Die Messergebnisse sind in Tabelle 5 angegeben.

*Tabelle 5*

|  |  | Vergl. Vers. 5 | Beispiel 8 | Vergl. Vers. 4 |
|---|---|---|---|---|
| $R_z$ (µm) |  | 0,21 | 0,32 | 0,31 |
| $R_a$ (µm) |  | 0,030 | 0,045 | 0,043 |
| Hochfrequenzpegel bei 5 MHz | [dB] | +2 | +2 | +1,5 |
| Chroma-Pegel bei 650 kHz | [dB] | +3 | +3 | +3 |
| S/N Luminanz bei 5 MHz | [dB] | +1 | +1 | 0 |
| S/N Chroma bei 650 kHz | [dB] | +1,5 | +1,5 | +0,5 |
| Tonpegel 1 kHz | [dB] | +2 | +1,8 | +1,8 |
| Tonpegel 5 kHz | [dB] | +0,5 | +0,8 | 0 |
| Fehlerzahl/min |  | 25 | 18 | 75 |

**Patentansprüche**

1. Verfahren zur Herstellung von magnetischen Aufzeichnungsträgern durch Aufbringen einer Magnetschicht, im wesentlichen bestehend aus in einem organischen Polymeren feinverteiltem magnetischen Material, auf eine Seite eines flexiblen Trägermaterials und Auftragen einer nichtmagnetisierbaren, an anorganischen Feststoffen freien Rückschicht auf die der Magnetschicht gegenüberliegende Seite des Trägermaterials, *dadurch gekennzeichnet,* dass zur Bildung der Rückschicht mindestens zwei miteinander nicht verträgliche Polymere in einem Gemisch aus einem niedrigsiedenden und einem höhersiedenden Lösungsmittel gelöst werden, die Lösung auf das Trägermaterial schichtförmig aufgetragen wird und die Lösungsmittel verdunstet werden, mit der Massgabe, dass die Polymere in dem höhersiedenden Lösungsmittel nicht löslich sind.

2. Magnetische Aufzeichnungsträger, bestehend aus einem flexiblen Trägermaterial, einer auf der einen Seite des Trägermaterials haftfest aufgebrachten Magnetschicht aus in einem organischen Polymeren feinverteiltem magnetischen Material und einer auf die gegenüberliegende Seite des Trägermaterials haftfest aufgebrachten nichtmagnetisierbaren, an anorganischen Feststoffen freien Rückschicht, *dadurch gekennzeichnet,* dass die Rückschicht aus einer Ausfällung zumindest zweier miteinander nicht verträglicher organischer Polymeren mittels Verdunsten aus mindestens einer die Polymeren lösenden niedrigsiedenden und mindestens einer die Polymeren nichtlösenden höhersiedenden Komponente eines Lösungsmittelgemisches besteht.

**Claims**

1. A process for the production of a magnetic recording medium by applying a magnetic layer, which consists essentially of magnetic material finely dispersed in organic polymers, to one side of a flexible base, and applying a non-magnetizable backing coating, which is free of in-organic solids, to that side of the base which is opposite the magnetic layer, wherein, in order to form the backing coating, at least two polymers which are incompatible with one another are dissolved in a mixture of at least one low boiling solvent and at least one higher boiling solvent, the solution is applied in the form of a layer to the base, and the solvents are evaporated, with the proviso that the polymers are insoluble in the higher boiling solvent.

2. A magnetic recording medium which consists essentially of a flexible base, a magnetic layer which is firmly bonded to one side of the base and consists of magnetic material finely dispersed in organic polymers and a non-magnetizable backing coating which is free of inorganic solids and is firmly bonded to the opposite side of the base, wherein the backing coating consists of a precipitate of at least two organic polymers which are incompatible with one another, precipitation being effected, by means of evaporation, from a solvent mixture comprising at least one low boiling component in which the polymers are soluble and at least one higher boiling component in which the polymers are insoluble.

## Revendications

1. Procédé de préparation de supports d'enregistrement magnétiques par application d'une couche magnétique, essentiellement constituée par une matière magnétique finement répartie dans un polymère organique, sur une face d'un matériau support souple et dépôt d'une couche arrière non magnétisable, dépourvue de matières solides inorganiques, sur la face en regard de la couche magnétique du matériau support, caractérisé par le fait que, pour former la couche arrière, on dissout au moins deux polymères, non compatibles l'un avec l'autre, dans un mélange d'un solvant à bas point d'ébullition et d'un solvant à point d'ébullition élevé, on dépose, sous forme de couche, la solution sur le matériau support, et on fait s'évaporer les solvants, sous réserve que les polymères ne soient pas solubles dans le solvant à point d'ébullition élevé.

2. Support d'enregistrement magnétique, constitué d'un matériau support souple, d'une couche magnétique appliquée de façon adhérente sur l'une des faces du matériau support et en une matière magnétique finement répartie dans un polymère organique, et d'une couche arrière non magnétisable dépourvue de matières solides inorganiques appliquée de façon adhérente sur la face en regard du matériau support, caractérisé par le fait que la couche arrière est constituée par la précipitation d'au moins deux polymères organiques non compatibles l'un avec l'autre, grâce à l'évaporation d'au moins un des composants d'un mélange de solvants, à bas point d'ébullition, dissolvant les polymères et d'au moins un des composants dudit mélange, à point d'ébullition élevé, ne dissolvant pas les polymères.